# FASCICULE DE BREVET EUROPEEN

(11) **EP 1 347 817 B1**
(45) Date de publication et mention de la délivrance du brevet: **12.11.2014**
(21) Numéro de dépôt: 01991886.1
(22) Date de dépôt: 21.12.2001
(51) Int. Cl.: B01D 53/04, B01D 53/047, F25J 3/04

(54) **PROCEDE DE TRAITEMENT D'UN GAZ PAR ADSORPTION ET INSTALLATION CORRESPONDANTE**
VERFAHREN UND VORRICHTUNG ZUR BEHANDLUNG VON GAS DURCH ADSORPTION
METHOD FOR TREATING A GAS BY ADSORPTION AND CORRESPONDING INSTALLATION

(30) Priorité: 29.12.2000 FR 0017319
(43) Date de publication de la demande: 01.10.2003
(73) Titulaire: L'AIR LIQUIDE, Société Anonyme pour l'Etude et l'Exploitation des Procédés Georges Claude, 75007 Paris (FR)
(72) Inventeur: GUILLARD, Alain, F-75016 Paris (FR); PEYRON, Jean-Marc, F-94000 Créteil (FR)
(74) Mandataire: Mercey, Fiona Susan
(86) Numéro de dépôt international: PCT/FR2001/004140
(87) Numéro de publication internationale: WO 2002/053265

(56) Documents cités:
- EP-A- 0 146 646
- FR-A- 2 777 477
- US-A- 4 197 095
- US-A- 4 981 499
- US-A- 5 407 465

## Description

La présente invention concerne un procédé de traitement d'un gaz par adsorption, du type dans lequel on utilise uniquement deux adsorbeurs, qui suivent chacun, en décalage, le même cycle où se succèdent une phase d'adsorption, à une haute pression du cycle, et une phase de régénération avec dépressurisation, qui se termine par une repressurisation de l'adsorbeur, le procédé comportant une étape de mise en parallèle des adsorbeurs durant laquelle le flux total de gaz traité est obtenu par à la fois le traitement d'un premier débit de gaz par au moins un adsorbeur terminant sa phase d'adsorption, et le traitement d'un second débit de gaz à traiter par au moins un autre adsorbeur commençant sa phase d'adsorption.

L'invention s'applique notamment à l'épuration de l'air destiné à être distillé.

De tels procédés de traitement sont courants pour obtenir, par exemple, un gaz exempt d'un ou de plusieurs constituants, considérés comme des impuretés vis-à-vis des traitements aval auquel est destiné ce gaz traité. Ils sont mis en oeuvre par des installations de traitement comportant au moins deux adsorbeurs. Ainsi l'air, par exemple, pour pouvoir être distillé, doit être épuré, d'une façon poussée, de l'eau et du CO₂. Généralément, une unité de distillation d'air est alimentée par un seul flux d'air. Ce flux d'air principal est épuré à un seul niveau de pression, et ce dans au moins deux bouteilles d'adsorbants dont l'une est en adsorption, pendant que l'autre se trouve en régénération.

Pendant le cycle de ces deux bouteilles, il est effectué, afin d'assurer une continuité de l'air qui va vers l'unité de distillation, une mise en parallèle des deux bouteilles en phase d'adsorption. Cependant, il est important de noter que, lorsque la bouteille qui vient d'être régénérée est remise en adsorption pour produire de l'air épuré, un pic de chaleur apparaît dans l'air épuré à la sortie de cette bouteille. Il est admis que cette augmentation de température est due à l'adsorption d'azote par l'adsorbant, et est d'autant plus marquée que la pression à laquelle est soumis l'adsorbeur est élevée. Cette variation de température vient perturber le comportement des éléments qui se trouvent en aval, que ce soit l'échangeur principal de l'unité de distillation d'air ou un surpresseur. Ce problème doit en particulier être résolu dans les procédés dits « à pompe » où de l'oxygène liquide sous pression est vaporisé par liquéfaction d'air haute pression.

EP-A-0146646 et US-A-4981499 montrent des procédés de traitement de gaz par adsorption utilisant au moins-quatre adsorbeurs.

US-A-5407465 décrit un procédé de traitement d'un gaz par adsorption, du type dans lequel on utilise uniquement deux adsorbeurs, qui suivent chacun, en décalage, le même cycle où se succèdent une phase d'adsorption et une phase de régénération. Des moyens sont décrits pour comparer les températures dans les deux adsorbeurs. Un des buts de l'invention est de limiter les conséquences néfastes de ce pic de chaleur en proposant un procédé facile à mettre en oeuvre et moyennant peu de modifications structurelles des installations de traitement relevant de l'art antérieur.

A cet effet, l'invention a pour objet un procédé selon la revendication 1.

Suivant d'autres caractéristiques de l'invention:
- ladite durée prédéterminée est au moins égale à 2 minutes ;
- pendant au moins partiellement l'étape de mise en parallèle, on fait varier le premier débit ;
- pendant au moins partiellement l'étape de mise en parallèle, on fait varier le second débit ;
- on fait varier le second débit de façon opposée aux variations du premier débit ;
- le gaz est de l'air et le traitement est une épuration de cet air en eau et en CO_{2;}
- on repressurise un adsorbeur au moyen d'un mélange gazeux de repressurisation contenant au moins un gaz parmi de l'air éventuellement sec et/ou décarbonaté, et un fluide plus riche en oxygène que l'air;
- pour une adsorption sous une pression au maximum de 7 bars environ, on maintient l'étape de mise en parallèle pendant au moins 1 minute et/ou avec un seuil de température d'environ 20°C;
- pour une adsorption sous une pression au maximum de 7 bars environ, on maintient l'étape de mise en parallèle pendant au moins 2 minutes et/ou avec un seuil de température d'environ 20°C ;
- pour une adsorption sous une pression au maximum de 7 bars environ, on maintient l'étape de mise en parallèle pendant au moins 2 minutes et/ou avec un seuil de température d'environ 15°C ;
- pour une adsorption sous une pression au maximum de 7 bars environ, on maintient l'étape de mise en parallèle pendant au moins 5 minutes et/ou avec un seuil de température d'environ 15°C ;
- pour une adsorption sous une pression au maximum de 7 bars environ, on maintient l'étape de mise en parallèle pendant au moins 5 minutes et/ou avec un seuil de température d'environ 10°C ;
- pour une adsorption sous une pression au maximum de 7 bars environ, on maintient l'étape de mise en parallèle pendant au moins 10 minutes et/ou avec un seuil de température d'environ 10°C ;
- pour une adsorption sous une pression comprise entre 7 et 36 bars environ, notamment entre 20 et 36 bars environ, on maintient l'étape de mise en parallèle pendant au moins 2 minutes et/ou avec un seuil de température d'environ 30°C,
- pour une adsorption sous une pression comprise entre 7 et 36 bars environ, notamment entre 20 et 36 bars environ, on maintient l'étape de mise en parallèle pendant au moins 5 minutes et/ou avec un seuil de température d'environ 30°C;
- pour une adsorption sous une pression comprise entre 7 et 36 bars environ, notamment entre 20 et 36 bars environ, on maintient l'étape de mise en parallèle pendant au moins 5 minutes et/ou avec un seuil de température d'environ 25°C ;
- pour une adsorption sous une pression comprise entre 7 et 36 bars environ, notamment entre 20 et 36 bars environ, on maintient l'étape de mise en parallèle pendant au moins 10 minutes et/ou avec un seuil de température d'environ 25°C ;
- pour une adsorption sous une pression comprise entre 7 et 36 bars environ, notamment entre 20 et 36 bars environ, on maintient l'étape de mise en parallèle pendant au moins 10 minutes et/ou avec un seuil de température d'environ 20°C ;
- pour une adsorption sous une pression comprise entre 7 et 36 bars environ, notamment entre 20 et 36 bars environ, on maintient l'étape de mise en parallèle pendant au moins 15 minutes et/ou avec un seuil de température d'environ 15°C ;
- les adsorbeurs suivent en décalage le même cycle de durée T avec une phase d'adsorption de durée comprise entre T/2 inclus et T non inclus.

L'invention a également pour objet une installation de traitement d'un gaz par adsorption pour la mise en oeuvre du procédé tel que défini ci-dessus, du type comprenant une ligne d'amenée du gaz ; une ligne d'évacuation du gaz traité; uniquement deux adsorbeurs qui suivent chacun, en décalage, le même cycle où se succèdent une phase d'adsorption, à une haute pression du cycle, et une phase de régénération avec dépressurisation, qui se termine par une repressurisation de l'adsorbeur, le procédé comportant une étape de mise en parallèle des adsorbeurs durant laquelle le flux total de gaz traité est obtenu par à la fois le traitement d'un premier débit de gaz à traiter par au moins un adsorbeur terminant sa phase d'adsorption, et le traitement d'un second débit de gaz à traiter par au moins un autre adsorbeur commençant sa phase d'adsorption ; et des moyens de raccordement des adsorbeurs à la ligne d'amenée, à la ligne d'évacuation, entre eux, et éventuellement à une ligne acheminant un fluide riche en oxygène, caractérisée en ce que l'installation comporte un dispositif de régulation de débit actionnant les moyens de raccordement de façon que lesdits moyens de raccordement maintiennent l'étape de mise en parallèle pendant une durée prédéterminée très supérieure au temps de commutation des vannes de commande des adsorbeurs établissant ladite étape, et/ou aussi longtemps que la différence de température entre celle du flux total et celle d'au moins un desdits débits est plus grande qu'un seuil de température prédéterminé.

Suivant une autre caractéristique de l'installation, le dispositif de régulation comporte un capteur différentiel de température entre le flux total ét le premier débit, et/ou entre le flux total et le second débit.

Chaque adsorbeur comprend une bouteille contenant chacune soit uniquement du tamis moléculaire soit du tamis moléculaire avec de l'alumine, capables d'adsorber l'eau et le CO₂ contenus dans l'air.

L'invention sera mieux comprise à la lecture de la description qui va suivre, donnée uniquement à titre d'exemple, et faite en se référant aux dessins annexés, sur lesquels :
- la figure 1 est une vue schématique d'une installation d'épuration selon l'invention ;
- la figure 2 est un diagramme du cycle d'un adsorbeur d'une paire d'adsorbeurs suivant le procédé de l'invention ;
- la figure 3 est un diagramme analogue à celui représenté sur la figure 2, mais de l'autre adsorbeur de la paire considérée ;
- la figure 4 est une vue analogue à la figure 1, mais d'une variante de l'installation selon l'invention.

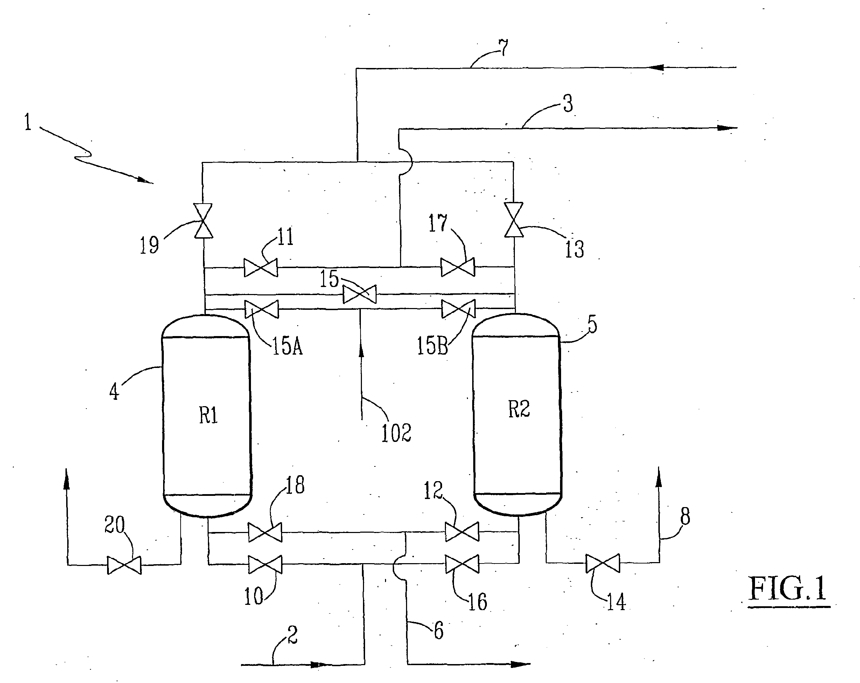

La figure 1 représente une installation d'épuration 1 d'une unité de distillation d'air. Cette installation 1 est adaptée pour éliminer des impuretés, notamment l'eau et le CO₂, contenues dans un flux.d'air atmosphérique comprimé à une pression comprise entre 3 et 36 bars et amené par une ligne 2, pour alimenter, via une ligne 3, une ligne principale d'échange thermique puis un appareil de distillation d'air. Ces derniers éléments ne sont pas représentés pour ne pas surcharger la figure 1. L'unité de distillation d'air peut être, par exemple, une double colonne de distillation d'air produisant de l'oxygène liquide qui, après pompage, est vaporisé dans la ligne d'échange thermique par condensation d'une partie de l'air comprimé.

L'installation 1 comprend deux adsorbeurs sensiblement identiques R₁ et R2. Chaque adsorbeur R1, R2 comprend une bouteille 4, 5 contenant chacune un matériau, par exemple du tamis moléculaire avec éventuellement de l'alumine, capable d'adsorber l'eau et le CO₂ contenus dans l'air.

L'installation 1 comprend en outre un certain nombre de conduites de raccordement et de vannes dont la disposition va apparaître maintenant lors de la description du procédé mis en oeuvre dans l'installation 1.

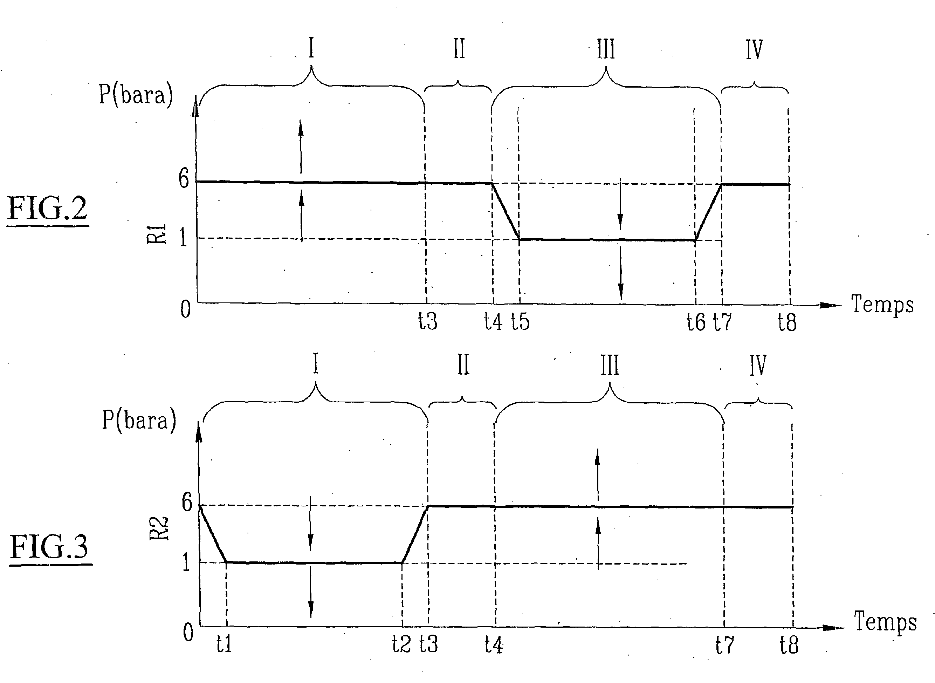

Ce procédé est obtenu par répétition d'un cycle, illustré sur les figures 2 et 3, l'adsorbeur R1 suivant le cycle représenté sur la figure 2 et adsorbeur R2 suivant parallèlement le même cycle en décalage temporel, représenté sur la figure 3.

Sur les figures 2 et 3, où les temps t sont portés en abscisses et les pressions absolues P en ordonnées, les traits orientés par des flèches indiquent les mouvements et destinations des courants gazeux, et, en outre, le sens de circulation dans respectivement les adsorbeurs R1 et R2 : lorsqu'une flèche est dans le sens des ordonnées croissantes (vers le haut du diagramme), le courant est dit à co-courant, dans l'adsorbeur. Si la flèche dirigée vers le haut est située au-dessous du trait indiquant la pression dans l'adsorbeur, le courant pénètre dans l'adsorbeur par l'extrémité d'entrée de l'adsorbeur ; si la flèche, dirigée vers le haut, est située au-dessus du trait indiquant la pression, le courant sort de adsorbeur par l'extrémité de sortie de l'adsorbeur, les extrémités d'entrée et de sortie étant respectivement celles du gaz à traiter et du gaz soutiré en phase de production ; lorsqu'une flèche est dans le sens des ordonnées décroissantes (vers le bas du diagramme), le courant est dit à contre courant, dans l'adsorbeur. Si la flèche dirigée vers le bas est située au-dessous du trait indiquant la pression de l'adsorbeur le courant sort de adsorbeur par l'extrémité d'entrée de l'adsorbeur; si la flèche dirigée vers le bas est située au-dessus du trait indiquant la pression, le courant pénètre dans l'adsorbeur par l'extrémité de sortie de l'adsorbeur, les extrémités d'entrée et de sortie étant toujours celles du gaz à traiter et du gaz soutiré en phase de production.

Il est à noter que l'origine des temps est identique sur les figures 2 et 3, permettant ainsi la lecture simultanée des deux figures pour un même instant donné. La description du cycle va principalement s'appuyer sur la figure 3, étant entendu que la figure 2 représente le même cycle décalé d'une demi-période de cycle.

Le cycle de la figure 3, dont la période T est, à titre d'exemple, égale à 360 minutes pour une pression d'adsorption sensiblement égale à 6 bars, comprend quatre étapes successives I à IV.

Lors de l'étape I, c'est-à-dire de t = 0 à t1 = 5 minutes, l'adsorbeur R1 est en phase d'adsorption, tandis que l'adsorbeur principal R2 est en phase de régénération.

L'air de la ligne 2 est alors amené par une vanne 10 ouverte dans l'adsorbeur R1. L'air épuré, c'est-à-dire dessiqué et décarbonaté, est alors renvoyé par l'intermédiaire d'une vanne 11 ouverte vers la ligne 3.

Pendant ce temps, l'adsorbeur R2 est ramené à une pression sensiblement égale à la pression atmosphérique en ouvrant une vanne 12, mettant ainsi à l'air l'adsorbeur R2 via une ligne 6. La vanne 12 reste ouverte jusqu'à t1 = 5 minutes, c'est-à-dire jusqu'à ce que la pression à l'intérieur de la bouteille 5 de adsorbeur R2 soit sensiblement égale à la pression atmosphérique.

Puis, la vanne 12 est fermée et de l'azote résiduaire de l'unité de distillation canalisé par une ligne 7, provenant par exemple de la tête de la colonne basse pression de la double colonne, alimente l'adsorbeur R2 via une vanne 13 ouverte.

Cet azote résiduaire circule dans l'adsorbeur R2 dans le sens de régénération, c'est-à-dire dans le sens contraire au sens d'adsorption, en assurant la régénération de cet adsorbeur saturé lors d'une phase d'adsorption précédente. L'azote de régénération est chauffé dans un premier temps, puis non chauffé.

L'azote résiduaire transportant l'eau et le CO₂ désorbés est ensuite renvoyé de l'adsorbeur R2, via une vanne 14 ouverte, vers une ligne 8 d'évacuation.

Cette vanne 14 reste ouverte jusqu'à t2 = 155 minutes, où elle se ferme, ainsi que la vanne 13, pour permettre la repressurisation de l'adsorbeur R2. Cette repressurisation de R2 consiste, de t2 à t3 = 170 minutes, à amener la pression à l'intérieur de la bouteille 5 de l'adsorbeur R2 à une valeur sensiblement égale à celle maintenue dans les éléments aval. Elle est réalisée par divers aménagements opératoires envisageables, notamment par l'ouverture d'une vanne 15 raccordant les sorties des deux adsorbeurs R1 et R2, et éventuellement par l'ouverture d'une vanne 15B raccordée à l'extrémité de sortie de R2 et alimentant partiellement ce dernier en fluide riche en oxygène, par exemple l'oxygène provenant de l'unité de distillation d'air via une conduite 102.

L'étape I s'achève lorsque la pression de l'adsorbeur R2 a atteint la valeur souhaitée de 6 bars.

Lors de l'étape II, c'est-à-dire de t3 à t4 = 180 minutes, l'adsorbeur R1 est, comme dans l'étape I, en adsorption.

Cependant, l'air de la ligne 2 est également amené par une vanne 16 ouverte dans l'adsorbeur R2. L'air ainsi épuré est envoyé par l'intermédiaire d'une vanne 17 ouverte, vers la ligne 3.

Au cours de l'étape II, les adsorbeurs R1 et R2 sont donc tous les deux en phase d'adsorption pour épurer l'air en parallèle.

Cependant, le flux d'air épuré en sortie de l'adsorbeur R2 est à une température bien supérieure à celui en sortie de l'adsorbeur R1, comme il a été rappelé précédemment. Le flux d'air total acheminé par la conduite 3, se composant du flux sortant de R1 et du flux sortant de R2, est donc à une température intermédiaire entre celle du flux sortant de R1 et celle du flux sortant de R2 suivant sensiblement une loi des mélanges.

Cette étape II de mise en parallèle des adsorbeurs en phase d'adsorption se poursuit pendant une durée prédéterminée très supérieure au temps de commutation des vannes de commande des adsorbeurs R1 et R2 établissant cette étape, qui dure quelques secondes,voire quelques dizaines de secondes, et/ou jusqu'à ce que la température intermédiaire du flux total soit au-dessous d'une température préalablement fixée, sensiblement égale à la température de l'air entrant dans R1 à laquelle est ajouté un seuil de tolérance en température, valant 10° dans cet exemple.

Au cours de l'étape III, c'est-à-dire de t4 à t7 = 345 minutes, l'adsorbeur R2 est maintenu en phase d'adsorption, tandis que l'adsorbeur R1 est en phase de régénération.

De façon analogue à R2 lors de l'étape I, R1 est soumis successivement à :
- une dépressurisation de t4 à t5 = 185 minutes par l'intermédiaire de la fermeture des vannes 10 et 11 et de l'ouverture d'une vanne 18 de fonction analogue à la vanne 12 pour R2 ;
- une circulation d'azote résiduaire de t5 à t6 = 335 minutes par l'intermédiaire de la fermeture de la vanne 18 et de l'ouverture de vannes 19 et 20 de fonctions analogues respectivement aux vannes 13 et 14 pour R2 ;
- une repressurisation de t6 à t7 = 350 minutes par l'intermédiaire de l'ouverture de la vanne 15, et éventuellement de.l'ouverture d'une vanne 15A, de fonction analogue à la vanne 15B pour R2.

En fin d'étape III, adsorbeur R1 est régénéré.

Au cours de l'étape IV, c'est-à-dire de t7 à t8 = 360 minutes, les adsorbeurs R1 et R2 assurent en parallèle l'épuration de l'air acheminé par la ligne 2, ces adsorbeurs étant tous les deux en phase d'adsorption comme lors de l'étape II.

L'étape IV se poursuit pendant la durée prédéterminée précitée et/ou jusqu'à ce que la température du flux total acheminé par la conduite 3 soit au-dessous de la même température préfixée évoquée précédemment, cette fois-ci sensiblement égale à la somme de la température de l'air entrant dans R2 et du même seuil de tolérance en température.

Ainsi, la mise en parallèle prolongée des deux adsorbeurs en phase d'adsorption permet d'obtenir un flux d'air épuré dont la température est contrôlée par mélange d'un flux chaud et d'un flux plus frais. L'intensité du pic de chaleur sur la ligne 3 s'en trouve atténuée, évitant, ou du moins limitant suffisamment, les perturbations en aval décrites précédemment.

A titre d'exemple numérique, le saut de température en début d'adsorption peut être réduit de 70°C à 15°C pour une pression d'air de 30 bars, et de 30°C à 10°C pour une pression d'air de 6 bars.

Le procédé suivant l'invention est mis facilement en oeuvre moyennant des réglages des vannes adaptés. Il est à noter par ailleurs qu'une repressurisation par de l'air enrichi en oxygène, qui a pour effet de réduire en supplément la température du flux chaud, implique de corriger légèrement les paramètres du procédé, ce qui est également facile à mettre en oeuvre.

D'autres exemples de cycles sont résumés dans le tableau ci-dessous, où sont détaillés les paramètres de l'étape de mise en parallèle du cycle :

| **Pression d'adsorption** | **Seuil de température** | **Minimum de la durée de l'étape de mise en parallèle** |
|---|---|---|
| 7 bars environ au maximum | 10° C | 5 minutes environ |
| 7 bars environ au maximum | 15° C | 5 minutes environ |
| 7 bars environ au maximum | 15° C | 2 minutes environ |
| 7 bars environ au maximum | 20° C | 2 minutes environ |
| 7 bars environ au maximum | 20° C | 1 minute environ |
| 7 à 36 bars environ | 15° C | 15 minutes environ |
| 7 à 36 bars environ | 20° C | 10 minutes environ |
| 7 à 36 bars environ | 25° C | 10 minutes environ |
| 7 à 36 bars environ | 25° C | 5 minutes environ |
| 7 à 36 bars environ | 30° C | 5 minutes environ |
| 7 à 36 bars environ | -30° C | 2 minutes environ |

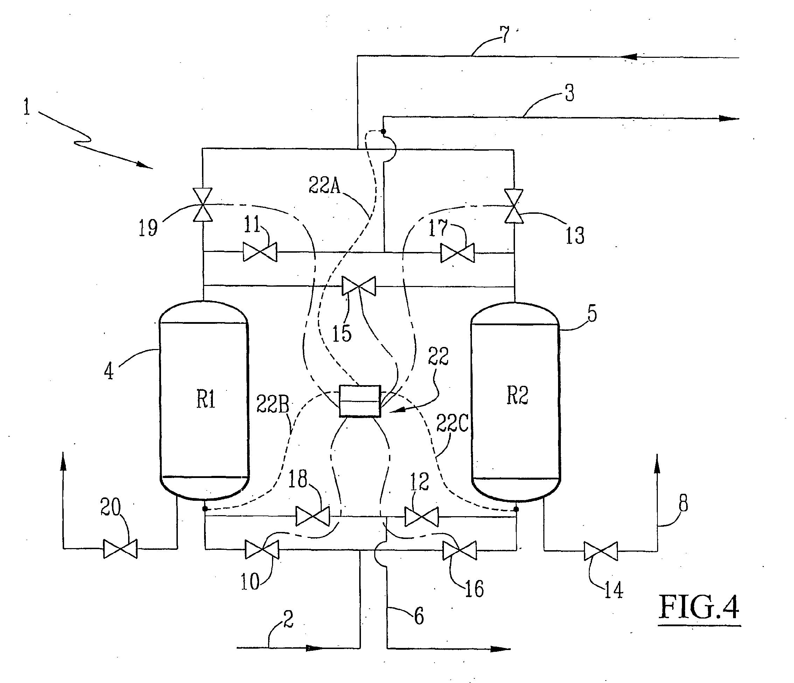

En variante, et tel que représenté sur la figure 4, l'installation 1 comporte un dispositif de régulation 22 relié aux vannes 10, 11, 15, 16 et 17. Ce dispositif 22 est capable de réguler le débit d'air passant par chacune de ces vannes.

Pendant l'étape de mise en parallèle des adsorbeurs, le dispositif 22 actionne de façon opposée les vannes correspondantes des deux adsorbeurs, de telle sorte que le flux acheminé par la ligne d'amenée 2 se répartit de façon dissymétrique entre les deux adsorbeurs R1 et R2 et/ou que les flux sortant de chacun de ces adsorbeurs *sont* dans des proportions variables dans le temps.

De nombreux aménagements de régulation de ces vannes sont envisageables. A titre d'exemple, le détail de l'un de ces aménagements est le suivant : lors de l'étape de mise en parallèle de R2 avec R1, c'est-à-dire lors de l'étape II suivant la numérotation précédente, le dispositif 22 commande une ouverture continûment progressive de la vanne 16, tout en commandant la fermeture continûment progressive de la vanne 10. Le flux en sortie de R1, sensiblement maximal à l'instant initial de l'étape de mise en parallèle, diminue ainsi continûment, tandis que, de façon concomitante, le flux en sortie de R2, sensiblement nul à l'instant initial de l'étape de mise en parallèle, augmente continûment de la même façon.

Avantageusement, et tel que représenté sur la figure 4, le dispositif 22 comporte un capteur différentiel de température. Ce capteur comporte trois branches 22A, 22B et 22C de mesure de la température du gaz sur respectivement la ligne d'évacuation 3, l'extrémité d'entrée de l'adsorbeur R1 et l'extrémité d'entrée de l'adsorbeur R2.

Ce capteur fournit au dispositif de régulation 22 la différence de température entre chacune de ses branches, de telle sorte que le dispositif commande les vannes 10, 11, 15, 16 et 17 de façon automatisée suivant le procédé de l'invention.

En variante non-représentée, les vannes 15A et 15B, permettant l'apport de fluide riche en oxygène pendant la repressurisation d'un adsorbeur, sont également reliées au dispositif de régulation 22, de façon que leur actionnement soit commandé et pris en compte par ce dispositif 22.

Bien entendu, les paramètres du cycle peuvent varier pendant le fonctionnement de l'installation.

De plus, la durée de mise en parallèle des adsorbeurs peut évoluer au cours du temps et/ou la charge de l'appareil, et/ou différer suivant l'adsorbeur qui vient d'être repressurisé.

## Revendications

1. Procédé de traitement d'un gaz par adsorption, du type dans lequel on utilise uniquement deux adsorbeurs (R1, R2), qui suivent chacun, en décalage, le même cycle où se succèdent une phase d'adsorption, à une haute pression du cycle, et une phase de régénération avec dépressurisation, qui se termine par une repressurisation de l'adsorbeur, le procédé comportant une étape de mise en parallèle des adsorbeurs durant laquelle le flux total de gaz traité est obtenu par à la fois le traitement d'un premier débit de gaz par au moins un adsorbeur (R1) terminant sa phase d'adsorption, et le traitement d'un second débit de gaz à traiter par au moins un autre adsorbeur (R2) commençant sa phase d'adsorption, **caractérisé en ce qu'**on maintient l'étape de mise en parallèle
i) pendant une durée prédéterminée très supérieure au temps de commutation des vannes de commande des adsorbeurs établissant ladite étape, ladite durée prédéterminée étant au moins égale à 1 minute, et/ou
ii) aussi longtemps que la différence de température entre celle du flux total et celle d'au moins un desdits débits est plus grande qu'un seuil de température prédéterminé et
pour une adsorption sous une pression au maximum de 7 bars, avec un seuil de température de 20°C, de 15°C ou de 10°C et pour une adsorption sous une pression comprise entre 7 et 36 bars, notamment entre 20 et 36 bars, avec un seuil de température de 30°C, de 25°C, de 20°C ou de 15°C, le gaz étant de l'air et le traitement étant une épuration de cet air en eau et en CO₂, on repressurise un adsorbeur au moyen d'un mélange gazeux de repressurisation contenant au moins un gaz parmi de l'air éventuellement sec et/ou décarbonaté, et un fluide plus riche en oxygène que l'air.

2. Procédé suivant la revendication 1, **caractérisé en ce que** ladite durée prédéterminée est au moins égale à 2 minutes.

3. Procédé suivant l'une des revendications précédentes, **caractérisé en ce que**, pendant au moins partiellement l'étape de mise en parallèle, on fait varier le premier débit.

4. Procédé suivant l'une des revendications précédentes, **caractérisé en ce que**, pendant au moins partiellement l'étape de mise en parallèle, on fait varier le second débit.

5. Procédé suivant les revendications 3 et 4 prises ensemble, **caractérisé en ce qu'**on fait varier le second débit de façon opposée aux variations du premier débit.

6. Procédé suivant l'une des revendications précédentes, selon la variante i) **caractérisé en ce que** le gaz est de l'air et le traitement est une épuration de cet air en eau et en CO₂.

7. Procédé suivant la revendication 6, selon la variante i) **caractérisé en ce qu'**on repressurise un adsorbeur au moyen d'un mélange gazeux de repressurisation contenant au moins un gaz parmi de l'air éventuellement sec et éventuellement décarbonaté, et un fluide plus riche en oxygène que l'air.

8. Procédé suivant la revendication 6 ou 7, **caractérisé en ce que**, pour une adsorption sous une pression au maximum de 7 bars, on maintient l'étape de mise en parallèle pendant au moins 1 minute et/ou avec un seuil de température de 20°C.

9. Procédé suivant la revendication 8, **caractérisé en ce qu'** on maintient l'étape de mise en parallèle pendant au moins 2 minutes et éventuellement avec un seuil de température de 20°C.

10. Procédé suivant la revendication 6 ou 7, **caractérisé en ce que**, pour une adsorption sous une pression au maximum de 7 bars, on maintient l'étape de mise en parallèle pendant au moins 2 minutes et éventuellement avec un seuil de température de 15°C.

11. Procédé suivant la revendication 10, **caractérisé en ce qu'**on maintient l'étape de mise en parallèle pendant au moins 5 minutes et éventuellement avec un seuil de température de 15°C.

12. Procédé suivant la revendication 6 ou 7, **caractérisé en ce que**, pour une adsorption sous une pression au maximum de 7 bars, on maintient l'étape de mise en parallèle pendant au moins 5 minutes et éventuellement avec un seuil de température de 10°C.

13. Procédé suivant la revendication 12, **caractérisé en ce qu'**on maintient l'étape de mise en parallèle pendant au moins 10 minutes et éventuellement avec un seuil de température de 10°C.

14. Procédé suivant la revendication 6 ou 7, **caractérisé en ce que**, pour une adsorption sous une pression comprise entre 7 et 36 bars, notamment entre 20 et 36 bars, on maintient l'étape de mise en parallèle pendant au moins 2 minutes et éventuellement avec un seuil de température d 30°C.

15. Procédé suivant la revendication 14, **caractérisé en ce qu'**on maintient l'étape de mise en parallèle pendant au moins 5 minutes et éventuellement avec un seuil de température de 30°C.

16. Procédé suivant la revendication 6 ou 7, **caractérisé en ce que**, pour une adsorption sous une pression comprise entre 7 et 36 bars, notamment entre 20 et 36 bars, on maintient l'étape de mise en parallèle pendant au moins 5 minutes et éventuellement avec un seuil de température de 25°C.

17. Procédé suivant la revendication 16, **caractérisé en ce qu'**on maintient l'étape de mise en parallèle pendant au moins 10 minutes et éventuellement avec un seuil de température de 25°C.

18. Procédé suivant la revendication 6 ou 7, **caractérisé en ce que**, pour une adsorption sous une pression comprise entre 7 et 36 bars, notamment entre 20 et 36 bars, on maintient l'étape de mise en parallèle pendant au moins 10 minutes et éventuellement avec un seuil de température de 20°C.

19. Procédé suivant la revendication 18, **caractérisé en ce qu'**on maintient l'étape de mise en parallèle pendant au moins 15 minutes et éventuellement avec un seuil de température de 15°C.

20. Installation de traitement d'un gaz par adsorption pour la mise en oeuvre d'un procédé selon l'une quelconque des revendications 1 à 19, du type comprenant une ligne (2) d'amenée du gaz ; une ligne (3) d'évacuation du gaz traité ; uniquement deux adsorbeurs (R1, R2) qui suivent chacun, en décalage, le même cycle où se succèdent une phase d'adsorption, à une haute pression du cycle, et une phase de régénération avec dépressurisation, qui se termine par une repressurisation de l'adsorbeur, le procédé comportant une étape de mise en parallèle des adsorbeurs durant laquelle le flux total de gaz traité est obtenu par à la fois le traitement d'un premier débit de gaz à traiter par au moins un adsorbeur terminant sa phase d'adsorption, et le traitement d'un second débit de gaz à traiter par au moins un autre adsorbeur commençant sa phase d'adsorption ; et des moyens (10, 11, 15, 16, 17, 15A, 15B) de raccordement des adsorbeurs à la ligne d'amenée, à la ligne d'évacuation, entre eux, et éventuellement à une ligne acheminant un fluide riche en oxygène, **caractérisée en ce que** l'installation comporte un dispositif de régulation de débit (22) actionnant les moyens de raccordement de façon que lesdits moyens de raccordement maintiennent l'étape de mise en parallèle pendant une durée prédéterminée très supérieure au temps de commutation des vannes de commande des adsorbeurs établissant ladite étape, et/ou aussi longtemps que la différence de température entre celle du flux total et celle d'au moins un desdits débits est plus grande qu'un seuil de température prédéterminé.

21. Installation suivant la revendication 20, **caractérisée en ce que** le dispositif de régulation (22) comporte un capteur différentiel de température (22A, 22B, 22C) entre le flux total et le premier débit, et/ou entre le flux total et le second débit.

## Patentansprüche

1. Verfahren zur Behandlung eines Gases mittels Adsorption, in dem nur zwei Adsorber (R1, R2) verwendet werden, die jeweils versetzt denselben Zyklus durchlaufen, wobei eine Adsorptionsphase bei einem hohen Druck des Zyklus und eine Regenerationsphase mit Druckabbau aufeinander folgen, wobei die Regenerationsphase mit einem erneuten Druckaufbau des Adsorbers endet, wobei das Verfahren einen Schritt des Parallelisierens der Adsorber umfasst, während dessen der Gesamtstrom von behandeltem Gas durch gleichzeitige Behandlung eines ersten Gasdurchsatzes durch mindestens einen Adsorber (R1), der seine Adsorptionsphase beendet, und Behandlung eines zweiten Durchsatzes von zu behandelndem Gas durch mindestens einen anderen Adsorber (R2), der seine Adsorptionsphase beginnt, erhalten wird, **dadurch gekennzeichnet, dass** der Schritt des Parallelisierens aufrechterhalten wird i) für eine vorher festgelegte Dauer, die viel länger als die Zeit des Schaltens von Steuerventilen der Adsorber ist, die diesen Schritt bilden, wobei die vorher festgelegte Dauer kleiner gleich 1 Minute ist, und/oder
ii) solange der Temperaturunterschied zwischen der Temperatur des Gesamtstroms und der Temperatur mindestens eines der Durchsätze größer als ein vorher festgelegter Temperaturgrenzwert ist, und
für eine Adsorption bei einem maximalen Druck von 7 bar mit einem Temperaturgrenzwert von 20 °C, 15 °C oder 10 °C und für eine Adsorption bei einem maximalen Druck zwischen 7 und 36 bar, insbesondere zwischen 20 und 36 bar, mit einem Temperaturgrenzwert von 30 °C, 25 °C, 20 °C oder 15 °C, wobei das Gas Luft ist und die Behandlung eine Reinigung dieses Gases aus Wasser und aus CO₂ ist, der Druck eines Adsorbers mittels eines Gasgemischs zum erneuten Druckaufbau, das mindestens ein Gas aus gegebenenfalls trockener und/oder entkarbonisierter Luft und einem Fluid, das reicher an Sauerstoff als Luft ist, erneut aufgebaut wird.

2. Verfahren nach Anspruch 1, **dadurch gekennzeichnet, dass** die vorher festgelegte Dauer kleiner gleich 2 Minuten ist.

3. Verfahren nach einem der vorhergehenden Ansprüche, **dadurch gekennzeichnet, dass** während zumindest eines Teils des Schritts des Parallelisierens der erste Durchsatz variiert wird.

4. Verfahren nach einem der vorhergehenden Ansprüche, **dadurch gekennzeichnet, dass** während zumindest eines Teils des Schritts des Parallelisierens der zweite Durchsatz variiert wird.

5. Verfahren nach den zusammengenommenen Ansprüchen 3 und 4, **dadurch gekennzeichnet, dass** der zweite Durchsatz auf entgegengesetzte Weise zu den Variationen des ersten Durchsatzes variiert wird.

6. Verfahren nach einem der vorhergehenden Ansprüche gemäß der Variante i), **dadurch gekennzeichnet, dass** das Gas Luft ist und die Behandlung eine Reinigung dieses Gases aus Wasser und aus CO₂ ist.

7. Verfahren nach Anspruch 6 gemäß der Variante i), **dadurch gekennzeichnet, dass** der Druck eines Adsorbers mittels eines Gasgemischs zum erneuten Druckaufbau, das mindestens ein Gas aus gegebenenfalls trockener und gegebenenfalls entkarbonisierter Luft und einem Fluid, das reicher an Sauerstoff als Luft ist, erneut aufgebaut wird.

8. Verfahren nach Anspruch 6 oder 7, **dadurch gekennzeichnet, dass** für eine Adsorption bei einem maximalen Druck von 7 bar der Schritt des Parallelisierens für mindestens 1 Minute und/oder mit einem Temperaturgrenzwert von 20 °C aufrechterhalten wird.

9. Verfahren nach Anspruch 8, **dadurch gekennzeichnet, dass** der Schritt des Parallelisierens für mindestens 2 Minuten und gegebenenfalls mit einem Temperaturgrenzwert von 20 °C aufrechterhalten wird.

10. Verfahren nach Anspruch 6 oder 7, **dadurch gekennzeichnet, dass** für eine Adsorption bei einem maximalen Druck von 7 bar der Schritt des Parallelisierens für mindestens 2 Minuten und gegebenenfalls mit einem Temperaturgrenzwert von 15 °C aufrechterhalten wird.

11. Verfahren nach Anspruch 10, **dadurch gekennzeichnet, dass** der Schritt des Parallelisierens für mindestens 5 Minuten und gegebenenfalls mit einem Temperaturgrenzwert von 15 °C aufrechterhalten wird.

12. Verfahren nach Anspruch 6 oder 7, **dadurch gekennzeichnet, dass** für eine Adsorption bei einem maximalen Druck von 7 bar der Schritt des Parallelisierens für mindestens 5 Minuten und gegebenenfalls mit einem Temperaturgrenzwert von 10 °C aufrechterhalten wird.

13. Verfahren nach Anspruch 12, **dadurch gekennzeichnet, dass** der Schritt des Parallelisierens für mindestens 10 Minuten und gegebenenfalls mit einem Temperaturgrenzwert von 10 °C aufrechterhalten wird.

14. Verfahren nach Anspruch 6 oder 7, **dadurch gekennzeichnet, dass** für eine Adsorption bei einem Druck zwischen 7 und 36 bar, insbesondere zwischen 20 und 36 bar, der Schritt des Parallelisierens für mindestens 2 Minuten und gegebenenfalls mit einem Temperaturgrenzwert von 30 °C aufrechterhalten wird.

15. Verfahren nach Anspruch 14, **dadurch gekennzeichnet, dass** der Schritt des Parallelisierens für mindestens 5 Minuten und gegebenenfalls mit einem Temperaturgrenzwert von 30 °C aufrechterhalten wird.

16. Verfahren nach Anspruch 6 oder 7, **dadurch gekennzeichnet, dass** für eine Adsorption bei einem Druck zwischen 7 und 36 bar, insbesondere zwischen 20 und 36 bar, der Schritt des Parallelisierens für mindestens 5 Minuten und gegebenenfalls mit einem Temperaturgrenzwert von 25 °C aufrechterhalten wird.

17. Verfahren nach Anspruch 16, **dadurch gekennzeichnet, dass** der Schritt des Parallelisierens für mindestens 10 Minuten und gegebenenfalls mit einem Temperaturgrenzwert von 25 °C aufrechterhalten wird.

18. Verfahren nach Anspruch 6 oder 7, **dadurch gekennzeichnet, dass** für eine Adsorption bei einem Druck zwischen 7 und 36 bar, insbesondere zwischen 20 und 36 bar, der Schritt des Parallelisierens für mindestens 10 Minuten und gegebenenfalls mit einem Temperaturgrenzwert von 20 °C aufrechterhalten wird.

19. Verfahren nach Anspruch 18, **dadurch gekennzeichnet, dass** der Schritt des Parallelisierens für mindestens 15 Minuten und gegebenenfalls mit einem Temperaturgrenzwert von 15 °C aufrechterhalten wird.

20. Anlage zur Behandlung eines Gases mittels Adsorption zum Durchführen eines Verfahrens nach einem der Ansprüche 1 bis 19, die eine Gaszufuhrleitung (2); eine Leitung (3) zum Abführen des behandelten Gases; nur zwei Adsorber (R1, R2), die jeweils versetzt denselben Zyklus durchlaufen, wobei eine Adsorptionsphase bei einem hohen Druck des Zyklus und eine Regenerationsphase mit Druckabbau aufeinander folgen, wobei die Regenerationsphase mit einem erneuten Druckaufbau des Adsorbers endet, wobei das Verfahren einen Schritt des Parallelisierens der Adsorber umfasst, während dessen der Gesamtstrom von behandeltem Gas durch gleichzeitige Behandlung eines ersten Durchsatzes von zu behandelndem Gas durch mindestens einen Adsorber, der seine Adsorptionsphase beendet, und Behandlung eines zweiten Durchsatzes von zu behandelndem Gas durch mindestens einen anderen Adsorber, der seine Adsorptionsphase beginnt, erhalten wird; und Mittel (10, 11, 15, 16, 17, 15A, 15B) zum Verbinden der Adsorber mit der Zufuhrleitung, mit der Abführleitung, miteinander und gegebenenfalls mit einer Leitung, die ein an Sauerstoff reiches Fluid befördert, umfasst, **dadurch gekennzeichnet, dass** die Anlage eine Durchsatzregelungsvorrichtung (22) umfasst, die die Verbindungsmittel betätigt, so dass die Verbindungsmittel den Schritt des Parallelisierens aufrechterhalten für eine vorher festgelegte Dauer, die viel länger als die Zeit des Schaltens von Steuerventilen der Adsorber ist, die diesen Schritt bilden, und/oder solange der Temperaturunterschied zwischen der Temperatur des Gesamtstroms und der Temperatur mindestens eines der Durchsätze größer als ein vorher festgelegter Temperaturgrenzwert ist.

21. Anlage nach Anspruch 20, **dadurch gekennzeichnet, dass** die Regelungsvorrichtung (22) einen Temperaturdifferenzsensor (22A, 22B, 22C) zwischen dem Gesamtstrom und dem ersten Durchsatz und/oder zwischen dem Gesamtstrom und dem zweiten Durchsatz umfasst.

## Claims

1. Method for treating a gas by adsorption, of the type in which only two adsorbers (R1, R2) are used, which each follow, in a shifted manner, the same cycle in which an adsorption phase, at a high cycle pressure, and a regeneration phase with depressurisation, which ends in the adsorber being repressurised, successively take place, the method comprising a step of placing the adsorbers in parallel, during which the total gas stream treated is obtained both by treating a first gas flow by means of at least one adsorber (R1) ending its adsorption phase, and treating a second gas flow to be treated by means of at least one other adsorber (R2) starting its adsorption phase, **characterised in that** the step of placing in parallel is maintained
i) for a predetermined duration which is much greater than the switching time of the valves for controlling the adsorbers establishing said step, said predetermined duration being at least equal to 1 minute, and/or
ii) as long as the difference in temperature between that of the total stream and that of at least one of said flows is greater than a predetermined temperature threshold and
for an adsorption at a maximum pressure of 7 bar, with a temperature threshold of 20 °C, 15 °C or 10 °C and for an adsorption at a pressure of between 7 and 36 bar, in particular between 20 and 36 bar, with a temperature threshold of 30 °C, 25 °C, 20 °C or 15 °C, the gas being air and the treatment being a purification of said air of water and of CO₂, an adsorber is repressurised by means of a gaseous repressurisation mixture containing at least one gas selected from optionally dry and/or decarbonated air, and a fluid which is richer in oxygen than air.

2. Method according to claim 1, **characterised in that** said predetermined duration is at least equal to 2 minutes.

3. Method according to any of the preceding claims, **characterised in that**, during at least part of the step of placing in parallel, the first flow is varied.

4. Method according to any of the preceding claims, **characterised in that**, during at least part of the step of placing in parallel, the second flow is varied.

5. Method according to claims 3 and 4 in combination, **characterised in that** the second flow is varied in the opposite manner to the variations of the first flow.

6. Method according to any of the preceding claims, according to the variant i), **characterised in that** the gas is air and the treatment is a purification of said air of water and of CO₂.

7. Method according to claim 6, according to the variant i), **characterised in that** an adsorber is repressurised by means of a gaseous repressurisation mixture containing at least one gas selected from optionally dry and optionally decarbonated air, and a fluid which is richer in oxygen than air.

8. Method according to either claim 6 or claim 7, **characterised in that**, for adsorption at a maximum pressure of 7 bar, the step of placing in parallel is maintained for at least 1 minute and/or with a temperature threshold of 20 °C.

9. Method according to claim 8, **characterised in that** the step of placing in parallel is maintained for at least 2 minutes and optionally with a temperature threshold of 20 °C.

10. Method according to either claim 6 or claim 7, **characterised in that**, for adsorption at a maximum pressure of 7 bar, the step of placing in parallel is maintained for at least 2 minutes and optionally with a temperature threshold of 15 °C.

11. Method according to claim 10, **characterised in that** the step of placing in parallel is maintained for at least 5 minutes and optionally with a temperature threshold of 15 °C.

12. Method according to either claim 6 or claim 7, **characterised in that**, for adsorption at a maximum pressure of 7 bar, the step of placing in parallel is maintained for at least 5 minutes and optionally with a temperature threshold of 10 °C.

13. Method according to claim 12, **characterised in that** the step of placing in parallel is maintained for at least 10 minutes and optionally with a temperature threshold of 10 °C.

14. Method according to either claim 6 or claim 7, **characterised in that**, for adsorption at a pressure of between 7 and 36 bar, in particular between 20 and 36 bar, the step of placing in parallel is maintained for at least 2 minutes and optionally with a temperature threshold of 30 °C.

15. Method according to claim 14, **characterised in that** the step of placing in parallel is maintained for at least 5 minutes and optionally with a temperature threshold of 30 °C.

16. Method according to either claim 6 or claim 7, **characterised in that**, for adsorption at a pressure of between 7 and 36 bar, in particular between 20 and 36 bar, the step of placing in parallel is maintained for at least 5 minutes and optionally with a temperature threshold of 25 °C.

17. Method according to claim 16, **characterised in that** the step of placing in parallel is maintained for at least 10 minutes and optionally with a temperature threshold of 25 °C.

18. Method according to either claim 6 or claim 7, **characterised in that**, for adsorption at a pressure of between 7 and 36 bar, in particular between 20 and 36 bar, the step of placing in parallel is maintained for at least 10 minutes and optionally with a temperature threshold of 20 °C.

19. Method according to claim 18, **characterised in that** the step of placing in parallel is maintained for at least 15 minutes and optionally with a temperature threshold of 15 °C.

20. Plant for treating a gas by adsorption for implementing a method according to any of claims 1 to 19, of the type comprising a gas feed line (2); a treated-gas discharge line (3); only two adsorbers (R1, R2) which each follow, in a shifted manner, the same cycle in which an adsorption phase, at a high cycle pressure, and a regeneration phase with depressurisation, which ends in the adsorber being repressurised, successively take place, the method comprising a step of placing the adsorbers in parallel, during which the total gas stream treated is obtained both by treating a first gas flow to be treated by means of at least one adsorber ending its adsorption phase, and treating a second gas flow to be treated by means of at least one other adsorber starting its adsorption phase; and means (10, 11, 15, 16, 17, 15A, 15B) for connecting the adsorbers to the feed line, to the discharge line, to one another, and optionally to a line transporting an oxygen-rich fluid, **characterised in that** the plant comprises a flow-regulating device (22) activating the connection means such that said connection means maintain the step of placing in parallel for a predetermined duration which is much greater than the switching time of the valves for controlling the adsorbers establishing said step, and/or as long as the temperature difference between that of the total stream and that of at least one of said flows is greater than a predetermined temperature threshold.

21. Plant according to claim 20, **characterised in that** the regulating device (22) comprises a differential temperature sensor (22A, 22B, 22C) between the total stream and the first flow, and/or between the total stream and the second flow.
